# EUROPEAN PATENT APPLICATION

(11) **EP 3 079 408 A1**
(43) Date of publication of application: **12.10.2016**
(21) Application number: 15305530.6
(22) Date of filing: 10.04.2015
(51) Int. Cl.: H04W 48/10

(54) **MACHINE TYPE COMMUNICATION**

(71) Applicant: ALCATEL LUCENT, 92100 Boulogne-Billancourt (FR)
(72) Inventor: Bhatoolaul, David, Swindon, Wiltshire SN5 7DJ (GB); Lim, Seau Sian, Swindon, Wiltshire SN5 7DJ (GB); Wong, Shin Horng, Swindon, Wiltshire SN5 7DJ (GB)
(74) Representative: Coghlan, Judith Elizabeth Kensy

(57) **Abstract**

Aspects and embodiments may provide a machine type communication device and method implemented at such a device; a network control node and method implemented at such a device. One aspect provides: a machine type communication device method in a wireless telecommunications network configured to support communication between a network control node and the machine-type communication device. The method comprises: receiving an indication from a network control node in a first modification period of an upcoming change to system information; receiving changed system information from the network control node in a second modification period; and using unchanged system information to support communication between the network control node and the machine-type communication device in at least the second modification period. Arrangements may provide that a machine type communication device is granted at least one standard modification period within which to receive updated system information, with no expectation of implementation of the new system information within in the reception modification period(s).

## Description

### FIELD OF THE INVENTION

Aspects and embodiments may provide a machine type communication device and method implemented at such a device; a network control node and method implemented at such a device.

### BACKGROUND

Wireless telecommunication systems are known. In a cellular system, radio coverage is provided to user equipment, for example, mobile phones, in areas known as cells. A base station is typically located within each cell to provide radio coverage. User equipment located within each cell are configured to receive information and data from a base station and may be operable to transmit information and data to that base station.

Information and data transmitted by a base station to user equipment occurs on channels of radio carriers known as downlink channels. Information and data transmitted by user equipment to the base station occurs on channels of radio carriers known as uplink channels. Although the deployment of base stations is largely controlled or controllable by a network operator, the deployment of user equipment is not. The unplanned deployment of user equipment within a network can cause unexpected consequences.

There is an emerging class of user equipment (such as machine-type communication devices) which may be used, for example, in relation to Smart meters. Such machine-type communication devices tend to be substantially immobile or have relatively low mobility once installed and, thus, although typical mobile user equipment may simply find it inconvenient when located in high attenuation areas and yet have restored coverage when the user equipment moves to a lower attenuation area, such immobile user equipment maybe permanently, or long-term, located in a region of high attenuation where network coverage may be very poor.

One issue which may occur in the deployment of machine-type communication devices within a network is that they may be deployed in areas suffering from such very high attenuation. Such high attenuation may cause user equipment to be unable to decode downlink information in a short space of time. That downlink information may be essential to ensure the machine-type communication devices operate sensibly within a network. If deployed in areas of high attenuation, user equipment (including machine-type communication devices) may find themselves unable to successfully receive traffic over a short space of time from a base station.

Typically, a machine-type communication device maybe considered to be a user equipment used by a machine for a specific application. Some machine-type communication devices may be designed to be simple and of low complexity. Such low complexity machine-type communication devices (LC-MTC UE) may be configured such that the cost of such a device is significantly less than that of a typical user equipment. An LC-MTC typically has low complexity as a result of a reduction in the RF bandwidth of such a device to 1.4 MHz. Such LC-MTC may operate within six physical resource blocks (PRB) where each PRB is a unit of resource allocation within the frequency domain. An LC-MTC UE may operate in any system bandwidth and is able to co-exist with legacy user equipment. Typically, an LC-MTC UE may be operable to re-tune its operational frequency to different 1.4 MHz sub-bands within a larger system bandwidth, thereby allowing frequency multiplexing amongst LC-MTC UE and also with legacy user equipment.

Techniques for ensuring some kind of communication can occur for substantially mobile MTC devices located, for example, in high attenuation areas may typically comprise, for example, implementing different communication techniques at a supporting base station. Such different communication techniques may comprise, for example, use of large numbers of repetitions of transmissions of a single message such that user equipment located in a high attenuation area may have an opportunity to receive and recompile such a message. That is to say, by repeating transmission of messaging, network nodes involved in communication may be operable to combine successive repetitions in order to increase the likelihood that a message can be decoded. Those repetitions maybe used to increase coverage provided in areas of high attenuation. In particular, communication techniques used to support machine-type communication devices, including those low complexity devices, are those which involve repetition of messages included on a physical channel. Such repetitions are likely to be high in number (hundreds of repetitions) which may have a significant impact on spectral efficiency.

The use of a typical wireless communication network to support communication with machine-type communication devices may have unexpected consequences. Accordingly, it is desired to provide techniques for communication with machine-type communication devices within a wireless communication network.

### SUMMARY

A first aspect provides a machine type communication device method in a wireless telecommunications network configured to support communication between a network control node and the machine-type communication device, the method comprising: receiving an indication from a network control node in a first modification period of an upcoming change to system information; receiving changed system information from the network control node in a second modification period; and using unchanged system information to support communication between the network control node and the machine-type communication device in at least the second modification period.

The first aspect recognises that, as with normal user equipment, machine-type communication devices are required to receive system information (SI) messages. In general, system information messages change rarely, but on the occasions when system information is changed, 3GPP Standards have specified mechanisms and constraints by which those changes occur to minimise the power consumed by a typical user equipment in order to be aware and react to those system information changes.

In particular, 3GPP Standards specify: a modification period (MP) and system information message change indications being sent to user equipment.

### Modification Period (MP)

Within a modification period, system information messages are, in general, only repeated and not changed. System information messages only start with the start of a new modification period. The length of the modification period in radio frames is calculated according to the formula shown below, using parameters signalled to the user equipment in system information block 2.

The modification period is typically calculated as follows:
Modification period (in number of radio frames) = modification period coefficient x default paging cycle per 10 ms
   where
the modification period coefficient is signalled in the BCCH configuration part of the system information block 2 and has values 2, 4, 8 and 16;
   and
the default paging cycle is 320 ms, 640 ms, 1280 ms, 2560 ms and that is also signalled in the PCCH configuration in system information block 2.

Once user equipment has acquired system information during modification period, the earliest that information can be expected to change and the user equipment maybe expected to reacquire the changed system information information is within the next modification period.

### System Information Message Change Indications to the User Equipment

In order to stop user equipment re-reading system information every modification period when it may not have been changed, 3GPP Standards have specified two methods according to which it is possible to indicate system information message changes to user equipment operating within a network:
(a) Using a "systeminfovalueTag" parameter within system information block 1 which can have a value of between 1 and 31.
   That indicator maybe incremented in a given modification period if, and only if, the system information messages for that modification period are different to the system information messages for a previous modification period. User equipment may be configured to use the systeminfovalueTag indicator; for example, on return to operation within a network after being out of coverage, to verify whether previously stored system information messages are still valid. Furthermore, user equipment maybe operable to consider stored information to be invalid after three hours (from the moment that system information message was successfully confirmed as valid at the user equipment) unless otherwise specified.
(b) Using paging messages.
   If a user equipment receives a paging message including an indication that the system information modification is updated (systemInfoModification (ENUM(TRUE)) then it is configured to know that the system information will change at the next modification period boundary. Although that indicator tells user equipment that the system information will be changed, it does not provide any detail regarding which or what about the system information will change. For normal user equipment, the time taken to acquire system information messages and paging messages is typically much smaller than a typical modification period. As a consequence, there is a high probability that user equipment will have ample time to successfully receive and react to a paging message within a modification period indicating a change to system information messages in the next modification period.

The first aspect recognises that for machine-type communication devices, particularly low complexity machine-type communication devices and those machine-type communication devices operating in a coverage enhanced mode, the time taken to acquire system information messages and/or paging messages maybe comparable to a modification period, largely as a result of the high levels of repetition required to ensure successful reception of a system information or paging message.

The first aspect recognises that unlike normal user equipment, there is a reasonable probability that machine-type communication devices may be substantially unable to operate in the same way as a normal user equipment in relation to successful reception and changing of system information. Furthermore, it is possible that, compared to the two normal user equipment, machine-type communication devices may have a high probability of system information messages and unicast, for example, paging, traffic overlapping in time. Furthermore, there may be a high probability that machine-type communication devices will not have time to receive a system information message change or a paging indication of a system information change before the next modification period starts.

Such an arrangement can lead to user equipment continuing to operate according to old system information, and thus causing interference within a network in the next modification period, since the network expects the machine-type communication devices to be operating with the new system information.

In one embodiment, the method comprises: prioritising reception of changed system information from the network control node in the second modification period. Accordingly, the MTC-UE mat prioritise being able to implement the new system information by prioritising reception of the updated system information messaging.

In one embodiment, the method comprises: determining a sub-period within the second modification period within which to listen for unicast messaging from the network control node. Accordingly, although prioritising reception of new system information within a modification period, an MTC-UE may allow for possible reception of a unicast message within that modification period.

In one embodiment, determining the sub-period comprises: calculating an appropriate sub-period based on a unique identifier associated with the machine-type communication device. Accordingly, MTC-UE operating within a network may be grouped, to allow for a spread of operation across time and frequency resource. The grouping may, for example, be determined in accordance with a unique identifier associated with each MTC-UE, such as, for example, a CRNTI.

In one embodiment, the indication from a network control node in a first modification period of an upcoming change to system information comprises: an indication of system information which is to change; and the method comprises implementing the changed system information, once received in the second modification period, in dependence upon the indication of system information which is to change. Accordingly, In some arrangements, some SIBs forming part of system information may be implemented immediately upon receipt by a MTCD, for example, SIB14 which may contain access control to a network for MTC UE; SIB 1 containing access control for normal UE. Arrangements may allow for some SIBs to be applied as soon as received, even within a transient modification period. Such arrangements may be particularly useful if the indication of an updated system information message in a later modification period includes an indication to MTC-UE of the type of system information which is to be changed.

A second aspect comprises a computer program product operable, when executed on a computer, to perform the method of the first aspect.

A third aspect provides a machine type communication device configured to support communication between a network control node and the machine-type communication device in a wireless telecommunications network, the device comprising: reception logic operable to receive an indication from a network control node in a first modification period of an upcoming change to system information; reception logic operable to receive changed system information from the network control node in a second modification period; and communication logic operable to use unchanged system information to support communication between the network control node and the machine-type communication device in at least the second modification period.

In one embodiment, the reception logic is operable to prioritise reception of changed system information from the network control node in the second modification period.

In one embodiment, the device comprises: determination logic operable to determine a sub-period within the second modification period within which to listen for unicast messaging from the network control node.

In one embodiment, the determination logic is configured to calculate an appropriate sub-period based on a unique indentifier associated with the machine-type communication device.

In one embodiment, the indication from a network control node in a first modification period of an upcoming change to system information comprises: an indication of system information which is to change; and the communication logic is configured to implement the changed system information, once received in the second modification period, in dependence upon the indication of system information which is to change.

A fourth aspect provides a network control node method in a wireless telecommunications network configured to support communication between the network control node and a machine-type communication device, the method comprising: informing the machine type communication device in a first modification period of an upcoming change to system information; transmitting changed system information to the machine type communication device in a second modification period; and using unchanged system information to support communication between the network control node and the machine-type communication device in at least the second modification period. Accordingly, a network may be configured in a symmetric style to expect appropriate MTC-UE behaviour as described in relation to the first aspect. The embodiments described in relation to the MTC-UE side may have corresponding embodiments in relation to the network control node side and, of course, vice versa.

In one embodiment, the upcoming change to system information comprises: a change to the system information in the second modification period. The second modification period may comprise one or more standard modification periods. In one embodiment, the upcoming change to system information comprises: a change to the system information in a further modification period. Accordingly, the network may take action to inform MTC-UE of a SI change one or more modification periods in advance of implementation of such a change in relation to standard UE. Accordingly, the lag in implementation caused by a "transient modification period" as implemented by an MTC-UE may not be overly detrimental to overall network operation.

In one embodiment, the method may comprise: using unchanged system information to support communication between the network control node and the machine-type communication device until at least the further modification period. Accordingly, implementation of new SI information may be delayed by one or more standard modification periods.

In one embodiment, the method may comprise: transmitting a unicast message to the machine-type communication device using the unchanged system information during the at least second modification period. Accordingly, network control node may assume the MTC-UE will use old SI information during the second modification period, and successful communication between the network node and the MTC-UE during the second modification period may be more likely than if the network node used updated SI.

In one embodiment, the method may comprise: determining, for the machine-type communication device, a sub-period of the at least second modification period, within which reception of unicast messaging is to be prioritised compared to reception of system information; and transmitting a unicast message to the machine-type communication device using the unchanged system information during the determined sub-period. Accordingly, MTC-UE may be configured to allow for unicast communication reception within a sub-period (or several sub-periods) of the second modification period.

In one embodiment, determining comprises: calculating an appropriate sub-period based on a unique identifier associated with the machine-type communication device.

A fifth aspect comprises a computer program product operable, when executed on a computer, to perform the method of the fourth aspect.

A sixth aspect provides a network control node configured to operate in a wireless telecommunications network and support communication between the network control node and a machine-type communication device, the network control node comprising: change logic operable to inform the machine type communication device in a first modification period of an upcoming change to system information; transmission logic operable to transmit changed system information to the machine type communication device in a second modification period; and communication logic operable to use unchanged system information to support communication between the network control node and the machine-type communication device in at least the second modification period.

In one embodiment, the upcoming change to system information comprises: a change to the system information in the second modification period.

In one embodiment, the upcoming change to system information comprises: a change to the system information in a further modification period.

In one embodiment, the communication logic may be configured to use unchanged system information to support communication between the network control node and the machine-type communication device until at least the further modification period.

In one embodiment, the communication logic may be configured to transmit a unicast message to the machine-type communication device using the unchanged system information during the at least second modification period.

In one embodiment, the network node comprises determination logic configured to determine, for the machine-type communication device, a sub-period of the at least second modification period, within which reception of unicast messaging is to be prioritised compared to reception of system information; and the communication logic is operable to transmit a unicast message to the machine-type communication device using the unchanged system information during the determined sub-period.

In one embodiment, the determination logic is operable to calculate an appropriate sub-period based on a unique identifier associated with the machine-type communication device.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates schematically modification period system information changes in relation to normal user equipment;
Figure 2 illustrates schematically modification period system information changes for machine-type communication devices in one arrangement;
Figure 3 illustrates schematically modification period system information changes for machine-type communication devices and paging messaging for machine-type communication devices according to one arrangement;
Figure 4 illustrates schematically one arrangement in which time-separated SI messaging and MTC-UE groups are implemented.

### DESCRIPTION OF THE EMBODIMENTS

Before discussing the embodiments in any more detail, first an overview will be provided.

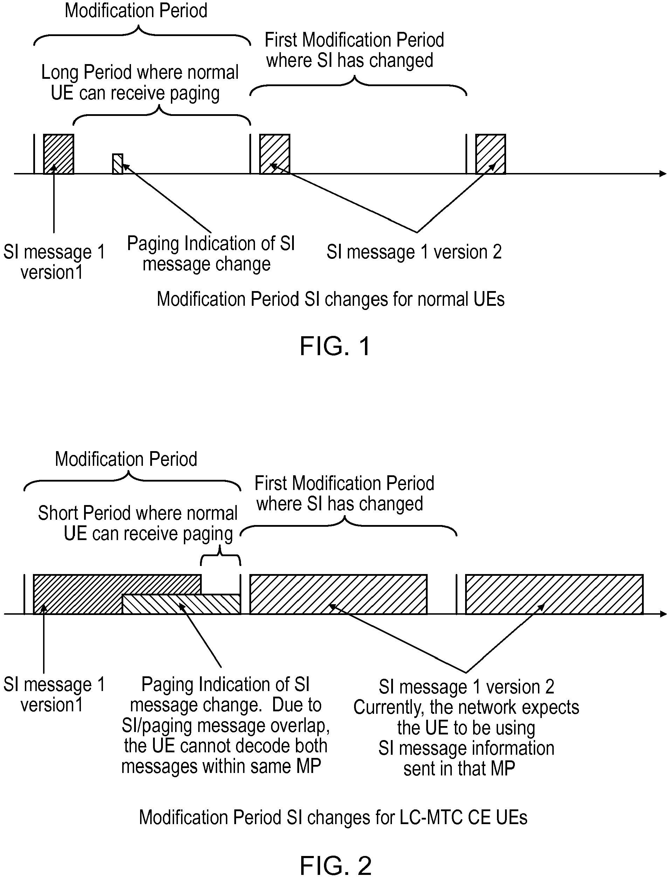

Figure 1 illustrates schematically the general operation of system information changes and modification periods in relation to normal user equipment operation. Illustrated in Figure 1 are two modification periods. Within the first modification period a system information message 1 version 1 is sent to standard user equipment. During the second modification period, in the arrangement shown, the system information is changed. As shown schematically in Figure 1, standard user equipment may be operable to receive system information message 1 version 1 very early within the first modification period. There then follows a long period where a normal user equipment may receive direct paging messaging. When a network determines that the system information is to change, it therefore sends a paging indication of that system information message change to standard user equipment. That paging indication is received by standard user equipment well before the beginning of the first modification period where the system information is changed. Standard user equipment can receive the system information message 1 version 2 early within the first modification period in which the system information has changed and implement those system information changes within that same modification period. If no indication that the system information message is going to change again in the next modification period is received then the user equipment is operable to assume there is no need to read the system information message within the next modification period.

Figure 2 illustrates schematically how arrangements in place within a network which work in relation to normal user equipment may be less likely to work in relation to machine-type communication devices. Again, a first modification period is shown in which system information message 1 version 1 is sent to a machine-type communication device. It can be seen in Figure 2 that it takes the machine-type communication device a large portion of the first part of the modification period to successfully receive system information message 1 version 1. There may remain only a short period where that user equipment could then be operable to receive paging information. If, during the modification period, a paging indication of a system information message change is sent to the machine-type communication device, the machine-type communication device may be unable to successfully receive that paging message and decode it within that modification period. When the system information message 1 version 2 is changed within the first modification period the machine-type communication device may be unaware that it needs to re-read the system information message and the network may expect the user equipment to be using the updated system information message sent in that modification period. As a result, operation of the machine-type communication device within the network can cause interference and disruption to other users, including standard user equipment.

A network may operate such that user equipment, including machine-type communication devices, are operable to apply previously acquired system information until that user equipment acquires new system information. Based on such operation, where there is an update of system information or SIB1, machine-type communication devices may continue to access the network using a previous configuration. That continued operation may occur for a long period of time, particularly if a machine-type communication device is operating in coverage enhanced mode. In particular, the machine-type communication device may continue to operate according to the previous configuration until new system information and/or SIB1 are acquired.

If the changes in the system information are essential, the failure to update system information may result in the machine-type communication device being blocked from accessing the network for that period of time or, worse, may cause interference with regular user equipment. Furthermore, if, for example, the system information message changes operation (for example, SIB14 which stops machine-type communication devices from accessing a network), the machine-type communication device may still be able to access the network based on a previously held system information configuration.

Arrangements may provide that a machine type communication device is granted at least one standard modification period within which to receive updated system information, with no expectation of implementation of the new system information within in the reception modification period(s).

Arrangements may be such that the network delays when it expects a machine type communication device to begin using a changed SI message. That delay may comprise one or more standard modification periods. The "transitional" standard modification periods, in which changed SI messages are signalled, but not expected by the network to be acted upon by the machine type communication device, may be called "transient modification periods". During the transient modification periods the network and machine type communication device may both be configured to operate using an unchanged SI message.

In some arrangements, the machine type communication device maybe configured to prioritise decoding a changed SI message, compared to unicast messaging, for example, paging, during a transient modification period.

In some arrangements, the machine type communication device maybe configured to determine how long, in standard modification periods, the transient modification period is to be. In some arrangements, the number of modification periods making up a total transient modification period may be signalled to the machine type communication device in SIB1.

In some arrangements, subject to the particular changes indicated in the system information, it may be possible for the machine type communication device to implement a change as soon as the changed SI message is received, rather than waiting for the entire transient modification period. Accordingly, the network may be configured to expect the machine type communication device to operate using either unchanged system information or new system information during the transient modification period. Accordingly, the network may operate such that it configures resources to handle machine type communication devices which have not managed to read the changed SI messages, as well as those which have managed to read the SI messages.

In some arrangements, some SIBs may be implemented immediately upon receipt by a MTCD, for example, SIB14 which may contain access control to a network for MTC UE; SIB 1 containing access control for normal UE. Arrangements may allow for some SIBs to be applied as soon as received, even within a transient modification period.

In some arrangements, a subset of SIBs or Sis may be subject to implementation of transient modification periods. SI and SIBs outside the subset would continue according to legacy behaviour - that is to say, the network and MTCD would use the most up to date SI or SIB. Such an arrangement may be of use if the SI change indicator sent to the MTCD can indicate which system information has changed and thus only the system information which is changed may be subjected to the transient modification period delay.

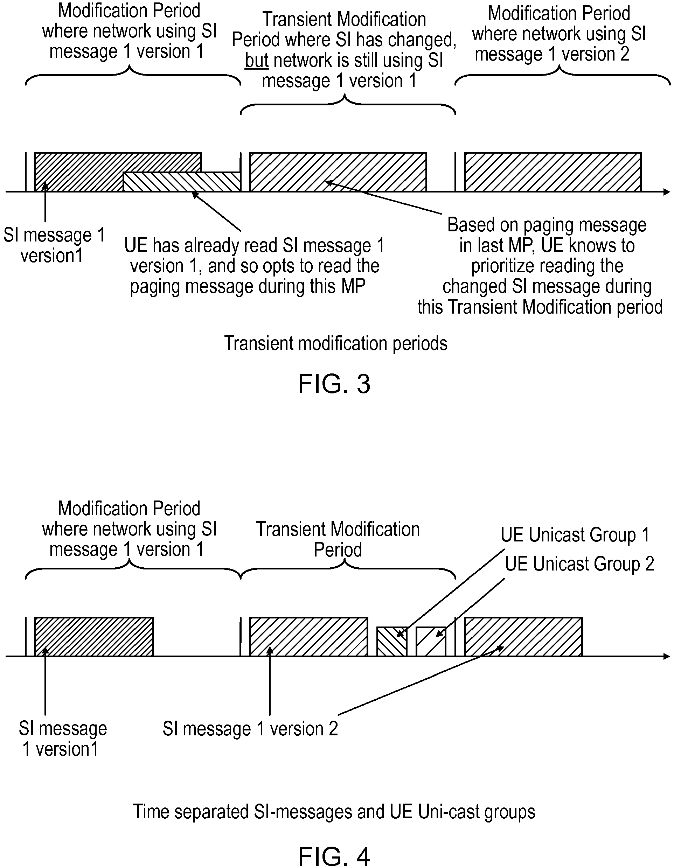

Figure 3 illustrates schematically one arrangement of a transient modification period in which system information has changed and yet, during the transient modification period, the MTCD still uses unchanged system information, and the network expects such behaviour. As shown schematically in Figure 3, in a first standard modification period a MTCD may be configured to use SI message 1, version 1. Since it already has that SI message, it can successfully receive a paging message within the first standard modification period, that paging message indicating to the MTC UE that there is to be a changed SI message. During the next standard modification period, the MTC UE is configured to still use SI message 1, version 1, while receiving SI message 1, version 2. In the arrangement shown in Figure 3, it is in standard modification period 3 where the MTC UE and network operate to use the new SI message.

Use of a "transient modification period" may prevent the occurrence of scenarios in which a MTC UE unexpectedly uses out of date SI information, such as, for example, RACH settings. In relation to RACH settings, unexpected use of outdated SI information may lead to the MTC UE wasting power and time making unsuccessful RACH attempts and, during such RACH attempts, to interference to other users of a network.

Some arrangements recognise that low complexity MTC-UE may not be operable to simultaneously receive broadcast and unicast traffic. Such user equipment may be configured to prioritise which type of message to offer priority. In some arrangements, MTC-UE may be configured such that within a given modification period, their behaviour may reflect whether that modification period is one in which they are receiving updated SI messaging. In modification periods where SI messages have not changed, prioritising unicast messaging over SI message updates is unlikely to cause an issue to network operation. In modification periods where SI messages have just changed, MTC-UE may be configured to prioritise reading the changed SI message. If such behaviour is implemented at MTC-UE, the network may be aware of that behaviour and an eNB may be configured to avoid sending unicast messaging to MTC-UE which are likely to be prioritising reception of SI messages.

In some arrangements, in the first modification in which SI messages have changed (the "transient modification period") a network may be configured to separate, in time, the transmission of SI messages from the transmission of unicast messages (e.g. paging). Such an arrangement may operate to prevent an eNB from wasting resource by sending an MTC-UE unicast traffic when that UE is already busy reading changed SI messaging.

In another arrangement, MTC-UE may be split into different groups during the "transient modification period". Such MTC-UE groups may have access to specific time segments or "sub-periods" within the "transient modification period" in which they are expected to read either SI message or listen for unicast transmissions from an eNB. In some arrangements, MTC-UE C-RNTI maybe used to determine which unicast group a UE belongs to.

During time periods where the UE is expected to read the SI, the eNB may still schedule unicast transmission to MTC-UE but this unicast transmission has high chance of not being received.

Figure 4 illustrates schematically one arrangement in which time-separated SI messaging and MTC-UE groups are implemented.

Arrangements may recognise that modifying paging occasions to avoid the repetition of system information may effectively force the network to schedule paging in the newly modified paging occasions. Some arrangements recognise that by implementing a "transitionary" modification period which is longer than a single standard modification period, a network has effectively extended a modification period (for use with MTC-UE) to match the repetition cycle required by MTC-UE.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A machine type communication device method in a wireless telecommunications network configured to support communication between a network control node and said machine-type communication device, said method comprising:
receiving an indication from a network control node in a first modification period of an upcoming change to system information;
receiving changed system information from said network control node in a second modification period; and
using unchanged system information to support communication between said network control node and said machine-type communication device in at least said second modification period.

2. A machine type communication device method according to claim 1, comprising: prioritising reception of changed system information from said network control node in a second modification period.

3. A machine type communication device method according to claim 1 or claim 2, determining a sub-period within said second modification period within which to listen for unicast messaging from said network control node.

4. A machine type communication device method according to claim 3, wherein determining said sub-period comprises: calculating an appropriate sub-period based on a unique indentifier associated with said machine-type communication device.

5. A machine type communication device method according to any preceding claim, wherein said indication from a network control node in a first modification period of an upcoming change to system information comprises: an indication of system information which is to change; and
implementing said changed system information, once received in said second modification period, in dependence upon the indication of system information which is to change.

6. A machine type communication device configured to support communication between a network control node and said machine-type communication device in a wireless telecommunications network, said device comprising:
reception logic operable to receive an indication from a network control node in a first modification period of an upcoming change to system information;
reception logic operable to receive changed system information from said network control node in a second modification period; and
communication logic operable to use unchanged system information to support communication between said network control node and said machine-type communication device in at least said second modification period.

7. A network control node method in a wireless telecommunications network configured to support communication between said network control node and a machine-type communication device, said method comprising:
informing said machine type communication device in a first modification period of an upcoming change to system information;
transmitting changed system information to said machine type communication device in a second modification period; and
using unchanged system information to support communication between said network control node and said machine-type communication device in at least said second modification period.

8. A network control node method according to claim 7, wherein said upcoming change to system information comprises: a change to said system information in said second modification period.

9. A network control node method according to claim 7 or claim 8, wherein said upcoming change to system information comprises: a change to said system information in a further modification period.

10. A network control node method according to any one of claims 7 to 9, comprising: using unchanged system information to support communication between said network control node and said machine-type communication device until at least said further modification period.

11. A network control node method according to any one of claims 7 to 10, comprising: transmitting a unicast message to said machine-type communication device using said unchanged system information during said at least second modification period.

12. A network control node method according to claim 11, comprising: determining, for said machine-type communication device, a sub-period of said at least second modification period, within which reception of unicast messaging is to be prioritised compared to reception of system information; and
transmitting a unicast message to said machine-type communication device using said unchanged system information during said determined sub-period.

13. A network control node method according to claim 12, wherein determining comprises: calculating an appropriate sub-period based on a unique indentifier associated with said machine-type communication device.

14. A network control node configured to operate in a wireless telecommunications network and support communication between said network control node and a machine-type communication device, said network control node comprising:
change logic operable to inform said machine type communication device in a first modification period of an upcoming change to system information;
transmission logic operable to transmit changed system information to said machine type communication device in a second modification period; and
communication logic operable to use unchanged system information to support communication between said network control node and said machine-type communication device in at least said second modification period.

15. A computer program product operable, when executed on a computer, to perform the method of any one of claims 1 to 5 or claims 7 to 13.
